# EUROPÄISCHE PATENTSCHRIFT

(11) **EP 3 598 106 B1**
(45) Veröffentlichungstag und Bekanntmachung des Hinweises auf die Patenterteilung: **07.10.2020**
(21) Anmeldenummer: 18000603.3
(22) Anmeldetag: 17.07.2018
(51) Int. Cl.: G01N 21/3504, G01N 21/05, G02B 26/04, F04D 23/00

(54) **MOBILE, TRAGBARE GASSENSORVORRICHTUNG, GASMESSVERFAHREN UND VERWENDUNG DER GASSENSORVORRICHTUNG**
MOBILE AND PORTABLE GAS SENSING DEVICE, GAS SENSING METHOD AND USE OF THE GAS SENSING DEVICE
DISPOSITIF MOBILE ET PORTABLE DE DÉTECTION DE GAZ, PROCÉDÉ DE DÉTECTION DE GAZ ET UTILISATION DU DISPOSITIF DE DÉTECTION DE GAZ

(43) Veröffentlichungstag der Anmeldung: 22.01.2020
(73) Patentinhaber: Schütz GmbH Messtechnik, 77933 Lahr (DE)
(72) Erfinder: HEIMBURGER, Volker, 77974 Meissenheim (DE); ETTRICH, Jörg, 77736 Zell am Harmersbach (DE); ELMENTHALER, Yannik, 77933 Lahr-Sulz (DE)
(74) Vertreter: mepat Patentanwälte

(56) Entgegenhaltungen:
- EP-A1- 0 076 356
- EP-A1- 0 706 042
- DE-A1- 2 006 371
- DE-A1-102015 202 946
- US-A1- 2015 136 961
- US-B1- 6 594 016

## Beschreibung

Die Erfindung betrifft eine mobile, tragbare Gassensorvorrichtung und ein damit durchführbares Gasmessverfahren. Ferner betrifft die Erfindung die Verwendung der mobilen, tragbaren Gassensorvorrichtung zum Mitführen oder Positionieren der mobilen, tragbaren Gassensorvorrichtung an Stellen, an denen Vorhandensein zumindest eines Gases zu überprüfen und dessen Konzentration zu messen sind.

Aus dem Stand der Technik sind unterschiedliche Vorrichtungen zur Gasanalyse bekannt, wobei eine besondere Herausforderung in der Entwicklung mobiler, tragbarer Gasspürgeräte besteht, mit denen schnell und zuverlässig auch kleine Gaskonzentrationen vor Ort an Messstellen detektiert und analysiert werden können.

Tragbare Gasmessgeräte werden beispielsweise für personenbezogene Messungen, Bereichsüberwachungen sowie beim Einstieg in enge Räume verwendet, um ein Vorhandensein von potentiell gefährlichen Gasen oder Dämpfen am Arbeitsort festzustellen. Zudem werden tragbare Gasmessgeräte bei der Lecksuche, vor allem bei der Überprüfung von Gasrohrnetzen verwendet.

Die DE 197 13 469 C1 beschreibt ein Gerät zur Analyse von Gasgemischen, das eine kleine und kompakte Bauweise aufweist und damit tragbar ist. Das Gerät weist einen Verdichter zum Ansaugen des Gasgemisches in ein Gasleitungssystem zur Weiterleitung des Gasstromes auf, das mit Gassensoren zur Bestimmung mindestens einer Gaskomponente und mit zumindest einer Absorptionseinheit ausgestattet ist, in der der Gasstrom mit einem von einem Depot zugeführten Absorptionsmittel gemischt wird, sodass mindestens eine bestimmte Gaskomponente aus dem Gasstrom in Lösung übergeht und damit in eine UV-VIS-sensitive Verbindung überführt wird. Weiter weist das Gerät mindestens eine der Absorptionseinheit zugeordnete photometrische Messzelle zur Bestimmung der Konzentration der bestimmten, in Lösung überführten Gaskomponente und eine Auswerteeinheit zum Aufzeichnen, Weiterverarbeiten und/oder Anzeigen der von dem mindestens einen Gassensor und der mindestens einen photometrischen Messzelle gelieferten Messwerte auf. Für die Nutzung sind Reagenzien erforderlich, die zur Überführung der Gaskomponente in Lösung, um die photometrische Messung durchführen zu können, nötig sind.

Nichtdispersive Infrarotsensoren (NDIR-Sensoren) benötigen für die Analyse von Gasmischungen keine Reagenzien; neben der Quelle für Infrarotstrahlung sind ein Erfassungsraum für das zu analysierende Gas, durch den die Infrarotstrahlung durchtritt, sowie ein Infrarot-Detektor ggf. mit vorgeschaltetem Wellenlängenfilter erforderlich. Das zu analysierende Gas wird in den Erfassungsraum gepumpt oder diffundiert hinein, in dem IR-Strahlung bestimmter Wellenlängen durch entsprechende Gasmoleküle absorbiert werden. Aus der durch den Infrarot-Detektor erfassten wellenlängenabhängigen Absorption kann auf die Konzentration des jeweils bei einer vorgegebenen Wellenlänge absorbierenden Gases geschlossen werden. Zur Kalibrierung des IR-Detektors umfassen diese Sensorvorrichtungen üblicherweise eine Referenzküvette mit einem eingeschlossenen Referenzgas, z. B. Stickstoff, die abwechselnd mit dem Erfassungsraum von der IR-Strahlung passiert wird. Die Umschaltung zwischen Erfassungsraum und Referenzküvette erfolgt beispielsweise mittels einer rotierenden Lochscheibe (Chopper). Häufig werden die verwendeten IR-Signale moduliert, um beispielsweise thermische Einflüsse zu kompensieren.

Aus EP 0 076 356 A1 sind ein Verfahren und eine Vorrichtung zur Messung der Konzentration einer IR- oder NDIR-Strahlung absorbierenden Komponente eines Komponentengemisches auf der Basis der Korrelations- oder Bifrequenzphotometrie bekannt. Die beschriebene Vorrichtung weist einen Strahler auf, dem ein Spektralmodulator und ein mit dem zu untersuchenden Komponentengemisch gefüllter Messraum nachgeordnet sind, wobei im Strahlengang hinter beiden ein Breitbanddetektor angeordnet ist: Dem Breitbanddetektor ist eine die Strahlung auf ihn fokussierende Linse vorgeschaltet. Als Spektralmodulator wird ein Gasfilter- oder Interferenzfilter-Karussell eingesetzt, das mit einer Kreisfrequenz arbeitet und zwei Filter aufweist, wobei das erste Filter im Bereich des Absorptionsspektrums einer Messkomponente selektiv absorbiert oder selektiv transmittiert und das zweite Filter im Bereich weder des Absorptionsspektrums der Messkomponente noch im Bereich der Spektren etwaiger Störkomponenten selektiv absorbiert oder selektiv transmittiert. Die Modulation bewirkt, dass der Messstrahlung zeitlich nacheinander zwei unterschiedliche spektrale Verteilungsfunktionen aufgeprägt werden, die durch Dunkelphasen voneinander getrennt sind. Die dabei vom Detektor erzeugten Ausgangssignale werden einer Fourieranalyse unterzogen, wobei der Quotient aus den dabei erhaltenen Fourierkoeffizienten ein Maß für die Konzentration der optisch absorbierenden Substanz darstellt. Die so ermöglichte Einstrahl-Photometrie ermöglicht zwar einen geringeren mechanischen Aufwand in konstruktiver Hinsicht des zugehörigen apparativen Aufbaus im Vergleich zu der bei NDIR-Sensorvorrichtungen üblichen Zweistrahl-Photometrie, bietet aber dennoch keine ausreichende Mobilität, wie sie für ein jederzeit und überall einsetzbares Handgasspürgerät erforderlich ist.

Ferner sind verschiedene Vorrichtungen zur IR-Spektroskopie bekannt, die zwar keine Handgeräte sind, aber dennoch vor Ort eingesetzt werden können. So zeigt EP 0 706 042 A1 eine Vorrichtung, die IR-Spektroskopie zur Reinheitsuntersuchung von Gasen unter Nutzung eines Halbleiterlasers offenbart. Eine Analyse- und eine Vergleichskammer werden mit Gasen bzw. mit den zu testenden Verunreinigungen befüllt und von dem aufgespaltenen, über verschiedene Wege geführten Lichtstrahl durchquert, wobei die Absorptionsspitzen die Menge der jeweiligen Verunreinigung anzeigen.

In US 6,594,016 B1 wird eine photoakustische Analyse durchgeführt, um die in der Atemluft eines Tieres vorliegenden Gaskonzentrationen zu messen, wobei der akustische Effekt über ein Mikrofon verstärkt als Maß für die Konzentration herangezogen wird.

US 2015/0136961 A1 schlägt vor, zunächst Gase aus einer Flüssigkeit zu extrahieren, um anschließend in einer FTIR-spektroskopischen Untersuchung deren Zusammensetzung in Bezug auf enthaltene Kohlenwasserstoffe zu bestimmen.

Hingegen beschreibt DE 10 2008 001 440 A1 ein tragbares Gasspürgerät mit kleinen Abmessungen, das hochempfindlich ist und zudem einen geringen Energieverbrauch hat. Allerdings verwendet dieses Gerät als Lichtquelle einen mittelinfraroten Laser und einen Lichtscanner, die an einem Ende einer Erfassungskammer angeordnet sind, an deren anderem Ende ein Lichtsensor angeordnet ist. Eine Gasquelle stellt über einen Gasflussregulator Gas an die Erfassungskammer bereit und eine Steuereinrichtung des Gasspürgeräts steuert die Lichtquelle und den Lichtsensor, wobei der Lichtscanner der Lichtquelle das Laserlicht in der Erfassungskammer reflektiert und scannt, während die Steuereinrichtung einen Phasen-sensitiven Detektor aufweist, der elektrisch an den Lichtsensor angeschlossen ist.

DE 20 06 371 A1 offenbart einen Rauchgasdetektor, der mittels eines Sauggebläses ein Messgas durch einen Messkanal fördert. Ein Lichtstrahl, dessen Absorption in dem Messgas auswertet wird, wird unmittelbar nach seiner Erzeugung durch eine Lochscheibe periodisch unterbrochen, sodass in dem endseitig des Messkanals angeordneten Detektor ein Wechselstrom erzeugt wird. Dabei werden das Gebläse und die Lochscheibe von einem gemeinsamen Motor angetrieben und dadurch eine kompakte Bauweise realisiert.

Ausgehend von diesem Stand der Technik ist es Aufgabe der vorliegenden Erfindung, eine mobile, tragbare Gassensorvorrichtung mit geringem Energiebedarf bereitzustellen, die unempfindlich gegenüber Störeinflüssen ist, auf Reagenzieneinsatz verzichtet und robust in einer einfachen mechanischen Konstruktion aufgebaut ist.

Diese Aufgabe wird durch eine Gassensorvorrichtung mit den Merkmalen des Anspruchs 1 gelöst.

Weiterbildungen sind in den Unteransprüchen ausgeführt.

Die weitere Aufgabe der Bereitstellung eines Gasmessverfahrens wird durch das Verfahren mit den Merkmalen des unabhängigen Anspruchs 7 gelöst.

Eine Verwendung der Gassensorvorrichtung wird durch die Merkmale des unabhängigen Anspruchs 9 offenbart.

Gemäß einer ersten Ausführungsform der erfindungsgemäßen mobilen, tragbaren Gassensorvorrichtung weist diese eine Infrarot-Lichtquelle, eine Erfassungskammer und einen Infrarot-Detektor auf, wobei die Infrarot-Lichtquelle und der Infrarot-Detektor an entgegengesetzten Enden der Erfassungskammer angeordnet sind. Weiter weist die Gassensorvorrichtung eine dem Infrarot-Detektor vorgeschaltete, mittels einer Antriebseinheit angetriebene rotierende Lochscheibe und einen Gasflussregulator auf, der erfindungsgemäß eine mit der rotierenden Lochscheibe kombinierte Pumpvorrichtung bildet. Dabei ist vorteilhaft und Platz sparend die Antriebseinheit zum Antreiben der rotierenden Lochscheibe die einzige Antriebseinheit der Gassensorvorrichtung. Sie treibt auch die Pumpvorrichtung an.

Erfindungsgemäß wird hierbei als Pumpvorrichtung ein Seitenkanalverdichter eingesetzt, dessen Laufrad nicht nur mit einer Beschaufelung ausgestattet ist, sondern wenigstens ein Loch oder mehrere Löcher aufweist, sodass das Laufrad gleichzeitig als rotierende Lochscheibe dienen kann.

Damit das IR-Licht hindurch tritt, ist es möglich, dass das Gehäuse des Seitenkanalverdichters vollständig aus einem IR-transparenten Material besteht, oder alternativ aus zumindest zwei optischen Elementen aus einem IR-transparenten Material. Zur Erfüllung der Chopperfunktion ist die Laufrad-Lochscheibe hingegen aus einem Material, das für die verwendete IR-Strahlung nicht transparent ist. Die zwei optischen Elemente liegen in einem zwischen der Infrarot-Lichtquelle und dem Infrarot-Detektor definierten Lichtpfad und hinter der Laufrad-Lochscheibe. Die Positionierung der optischen Elemente korrespondiert dabei mit einer Winkellage des Lochs der Laufrad-Lochscheibe (entsprechendes gilt bei mehreren Löchern). Mit Winkellage ist hierbei eine beliebige, aber vorbestimmte, definierte Stelle auf der Kreisbahn gemeint, auf der sich das oder die Löcher mit der rotierenden Laufrad-Lochscheibe bewegen.

Eine Pumpvorrichtung ist bei der Verwendung von Infrarot-Detektoren in mobilen Gasspürgeräten erforderlich, da die Diffusion keine ausreichenden Reaktionszeiten mehr bringt, d. h., die Zeitdauer, bis die Erfassungskammer gleichmäßig gefüllt ist, um ein repräsentatives, zuverlässiges Messergebnis zu erhalten, ist ohne Pumpeneinsatz zu lange. In bisherigen Gasspürgeräten, die als Gasflussregulatoren eine Membranpumpe oder Drehschieberpumpe verwenden, sind nachteilig zwei Antriebseinheiten erforderlich, eine für die Pumpvorrichtung und eine für die rotierende Lochscheibe zur Unterbrechung des Lichtpfads für den IR-Detektor. In Bezug auf das Gewicht für die Ausführung als tragbares Handgerät kommt die erfindungsgemäße Gassensorvorrichtung vorteilhaft also mit einer einzigen Antriebseinheit aus, mit der die Pumpvorrichtung und die damit kombinierte rotierende Lochscheibe gemeinsam angetrieben werden.

Neben der ermöglichten Kombination aus Laufrad und Lochscheibe mit Chopperfunktion liegen die Vorteile des Seitenkanalverdichters in dessen Laufruhe, sodass die Gassensorvorrichtung beim Messen keinen Lärm verursacht. Ein weiterer Vorteil ist die einfache mechanische Konstruktion, sodass die Gassensorvorrichtung robust und unempfindlich gegen mechanische Einwirkungen und einfach zu montieren und zu warten ist.

Die Anordnung der optischen Elemente anstelle einfacher Löcher in den Gehäuseteilen des Seitenkanalverdichters ist erforderlich, um zu verhindern, dass der Gasstrom einen anderen Weg als den vorgesehenen durch den Seitenkanalverdichter nimmt. Zum Durchtreten der IR-Strahlung sind die optischen Elemente aus einem Material gefertigt, das zumindest für die verwendeten Wellenlängen transparent ist. Dabei kann es sich um ein IR-transparentes Glasmaterial, aber auch um einen Kunststoff handeln. Beispielsweise gibt es thermoplastische Kunststoffe auf Polymethylmethacrylat-Basis, die für Infrarotlicht durchlässig sind. Die optischen Elemente können aus dünnen Folienstücken eines solchen Kunststoffes bestehen. Ferner können die optischen Elemente gegebenenfalls auch eine optische Funktion einer Linse, eines Spiegels oder eines Filters etc. aufweisen.

Um einen möglichst langen Durchtrittsweg des IR-Lichts durch die Erfassungskammer in der als Handgerät ausgeführten Gassensorvorrichtung zu ermöglichen, kann die Erfassungskammer vorteilhaft als V-förmiger Kanal ausgebildet sein, wobei an dessen Umlenkspitze, an der die beiden Schenkel des V-förmigen Kanals aufeinandertreffen, ein Umlenkspiegel für das IR-Licht vorgesehen ist. Dabei kann an dem Ende des V-förmigen Kanals mit der Infrarot-Lichtquelle der Gasauslass vorgesehen sein und der Gaseinlass der Gassensorvorrichtung kann in das Seitenkanalverdichter-Gehäuse münden, das wegen der Laufrad-Lochscheibe an dem Ende mit dem Infrarot-Detektor angeordnet ist und fluidisch mit dem V-förmigen Kanal verbunden ist. Ein zu analysierendes Gasgemisch wird so durch den Seitenkanalverdichter angesaugt und in die Erfassungskammer gepumpt, die das Gasgemisch mit einer diffusionsähnlichen Geschwindigkeit durchquert.

Um eine solche diffusionsähnliche Gasströmung durch die Erfassungskammer bereitzustellen, ist der Seitenkanalverdichter entsprechend ausgelegt, wobei zu berücksichtigen ist, dass gleichzeitig die Laufrad-Lochscheibe mit einer Drehzahl betrieben wird, die eine Chopperfunktion, d. h. eine Teilung der IR-Lichtimpulse mit einer vorbestimmten Frequenz von beispielsweise 100 Hz, bereitstellt. Bei einer vorbestimmten Frequenz der Chopperfunktion ist die erforderliche Drehzahl abhängig von der Anzahl der Löcher in der Laufrad-Lochscheibe.

Besonders geeignet sind Seitenkanalverdichter, deren Seitenkanal als Einseitenkanal in dem Seitenkanal-Gehäuseteil ausgebildet ist, vorzugsweise mit halbkreisförmigem Querschnitt. Um die Bedingungen - Chopperfrequenz und diffusionsähnlicher Gasstrom mit vorgegebenem Druckunterschied (z. B. zur Durchströmung eines Staubfilters, etc.) - optimal zu erfüllen, liegt das Verhältnis zwischen dem Radius des Querschnitts des Seitenkanals und dem Radius des Außenumfangs des Seitenkanals vorzugsweise unter 0,1. Mit "diffusionsähnlich" werden vorliegend Gasströmungen bezeichnet, die die Messstrecke mit Volumenströmen in einem Bereich von 2 bis 40 l/h entlang der Lichtstrahlführung passieren. Mit der Wahl des Volumenstroms wird die mit der Gassensorvorrichtung erreichbare Reaktionszeit bestimmt. Diffusionsähnliche Gasströmungen sind bevorzugt, um eine zuverlässige und korrekte Bestimmung in einer kurzen Erfassungszeit durchführen zu können, ohne dass zu große Volumenströme unerwünschte Verdünnungseffekte verursachen können.

Ferner kann vorgesehen sein, dass der Seitenkanal in dem Seitenkanal-Gehäuseteil einen Unterbrecherabschnitt zwischen einem Saug- und einem Druckstutzen aufweist, der sich zumindest über zwei Schaufelteilungen der Beschaufelung, inklusive einer Schaufelkantendicke, der Laufrad-Lochscheibe erstreckt. Um Druckverlust am Auslauf zum Druckstutzen zu vermeiden, kann vorgesehen sein, dass ein Tangentialauslauf den Seitenkanal mit dem Druckstutzen verbindet.

Die Gehäuseform von Seitenkanalgehäuseteil und Motorgehäuseteil, die das Seitenkanalverdichter-Gehäuse bilden, sind derart konzipiert, dass ein leichter Zugriff sowohl zur Beschaufelung als auch zum Seitenkanal ermöglicht wird. Die Antriebseinheit kann in einer abgedichteten Durchtrittsöffnung des Motorgehäuseteils gehaltert werden, wobei die Antriebseinheit leicht aus dem Motorgehäuseteil lösbar ist, etwa um im Schadensfall nicht den kompletten Seitenkanalverdichter, sondern nur die Antriebseinheit austauschen zu müssen. Das Gehäuse besteht vorteilhaft nur aus zwei Gehäuseteilen und weist so eine geringstmögliche Anzahl an Dichtflächen auf. Trotz geringer Baugröße ist das Gehäuse daher einfach zu montieren. Der Seitenkanal, und damit auch Druck- und Saugstutzen, wird vorzugsweise so ausgerichtet, dass er von der Antriebseinheit abgewandt ist, sodass in einer bevorzugten Ausführungsform der Vorrichtung der IR-Detektor nahe oder direkt an oder in dem Motorgehäuseteil positioniert werden kann, wo nur die Verkabelung der Antriebseinheit vorliegt, sodass der IR-Detektor leicht von außen zugänglich ist.

Einzelne oder alle Komponenten des Seitenkanalverdichters, d. h. die Laufrad-Lochscheibe, das Seitenkanalgehäuseteil und/oder das Motorhalterungsgehäuseteil können jeweils mittels 3D-Druck einstückig hergestellt sein. Hierbei können in Abhängigkeit der gewünschten Eigenschaften das gleiche oder unterschiedliche Kunststoffmaterialen verwendet werden, es können auch für die jeweiligen Anforderungen abgestimmte Kunststoffmischungen eingesetzt werden. Bei der Herstellung mittels Kunststoff-3D-Druck können vorteilhaft die optischen Elemente aus einem für IR-transparenten Material mitgedruckt werden, sofern nicht die Gehäuseteile selbst komplett aus IR-transparentem Material bestehen. Ebenso können Dichtelemente, die zur Abdichtung zwischen den Gehäuseteilen und/oder zwischen dem Motorhalterungsgehäuseteil und der Antriebseinheit vorgesehen sind, aus einem abdichtenden Kunststoffmaterial mitgedruckt sein. Druckbare abdichtende Kunststoffmaterialien sind beispielsweise Nitril-Butadien und Ethylen-Propylen-Kautschuk.

Die Herstellung mittels 3D-Druck gestattet es, einen Seitenkanalverdichter mit den zum Einbau in ein Handgerät erforderlichen Abmessungen bereitzustellen, für die unter 55 mm Durchmesser gefordert sind, sodass die Gassensorvorrichtung noch in einer Gerätegröße gefertigt werden kann, die in der Hand haltbar ist. Hierbei können auch die zum Einsatzzweck erforderlichen Dimensionierungen von Laufrad und Seitenkanal zuverlässig umgesetzt werden.

Abgesehen vom Kunststoff-3D-Druck kommen auch (Pulver-)metallurgische generative Fertigungsverfahren oder eine herkömmliche spanende Bearbeitung, z. B. Drehen, des Motorhalterungsgehäuseteils in Frage. Zudem kann für eine genauere Ausrichtung des Laufrades mittels eines Montagebleches das Laufrad auch mittels Spritzguss (Metall oder Kunststoff) hergestellt werden. Wegen des Gewichts des Seitenkanalverdichters ist Kunststoff bevorzugt.

Eine Ausführungsform des erfindungsgemäßen Gasmessverfahrens verwendet eine erfindungsgemäße mobile, tragbare Gassensorvorrichtung und umfasst die Schritte:
- Positionieren der mobilen, tragbaren Gassensorvorrichtung an einer Gasmessstelle, also einer Stelle, an der das Vorhandensein zumindest eines Gases zu überprüfen und dessen Konzentration zu ermitteln ist,
- Aktivieren der einzigen Antriebseinheit der Gassensorvorrichtung zum Antreiben der Pumpvorrichtung in Form eines Seitenkanalverdichters und rotieren Lassen der als dessen Laufrad ausgebildeten Lochscheibe, dabei
- Einstellen der mit der rotierenden Lochscheibe kombinierten Pumpvorrichtung mit einer vorbestimmten Drehzahl, dadurch Bereitstellen eines Gasvolumenstroms in einem Bereich von 2 bis 40 l/h, und Erzeugen eines diffusionsähnlichen Gasstroms durch die Erfassungskammer hindurch, und
- Aktivieren der IR-Lichtquelle und des IR-Detektors, sodass IR-Strahlung entlang eines IR-Lichtpfads die Erfassungskammer durchläuft, dabei wellenlängenabhängig und in Abhängigkeit der Art und Konzentration IR-absorbierender Gase Absorption stattfinden Lassen;
- Erfassen der transmittierten IR-Strahlung mittels des IR-Detektors und hieraus Bestimmen der Art und Konzentration der IR-absorbierenden Gase.

Das Einstellen der mit der rotierenden Lochscheibe kombinierten Pumpvorrichtung mit einer vorbestimmten Drehzahl bewirkt die Bereitstellung einer Chopperfunktion der rotierenden Lochscheibe.

Das Messergebnis, also der zu "Erfassen" gehörige Schritt, kann dann über eine geeignete Ausgabevorrichtung, z. B. eine Anzeigevorrichtung, dargestellt werden. Zusätzlich oder alternativ kann hierbei auch ein optisches oder akustisches Warnsignal eingesetzt werden.

Eine erfindungsgemäße Verwendung einer erfindungsgemäßen mobilen, tragbaren Gassensorvorrichtung sieht das Mitführen oder Positionieren der mobilen, tragbaren Gassensorvorrichtung an Stellen, an denen Vorhandensein zumindest eines Gases zu überprüfen und dessen Konzentration zu messen sind, unter Durchführung obiger Verfahrensschritte vor.

Weitere Ausführungsformen sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- **Fig. 1**: eine schematische Ansicht der Gassensorvorrichtung,
- **Fig. 2**: eine schematische Ansicht entsprechend Fig. 1 mit Gasströmung,
- **Fig. 3**: eine schematische Ansicht entsprechend Fig. 1 mit IR-Lichtpfad,
- **Fig. 4**: eine schematische Ansicht entsprechend Fig. 1 mit Gasströmung und IR-Lichtpfad,
- **Fig. 5**: eine Draufsicht auf eine herkömmliche Lochscheibe,
- **Fig. 6**: eine Draufsicht auf eine Laufrad-Lochscheibe einer erfindungsgemäßen Gassensorvorrichtung,
- **Fig. 7**: eine schematische Halbschnittansicht eines Seitenkanalverdichters einer erfindungsgemäßen Gassensorvorrichtung,
- **Fig. 8**: eine perspektivische Explosionsansicht eines Seitenkanalverdichters einer erfindungsgemäßen Gassensorvorrichtung,
- **Fig. 9**: eine Schnittansicht durch einen Seitenkanalverdichter einer erfindungsgemäßen Gassensorvorrichtung entsprechend Fig. 8,
- **Fig. 10**: Draufsicht und Schnittansicht des Motorgehäuseteils des Seitenkanalverdichters aus Fig. 8/9,
- **Fig. 11**: Draufsicht und Schnittansichten des Seitenkanalgehäuseteils des Seitenkanalverdichters aus Fig. 8/9.

Die erfindungsgemäße Sensorvorrichtung bezieht sich auf ein tragbares, mobiles Handgerät zur Gasmessung, das zur Gasanalyse IR-Spektroskopie, vorzugsweise NDIR-Spektroskopie verwendet.

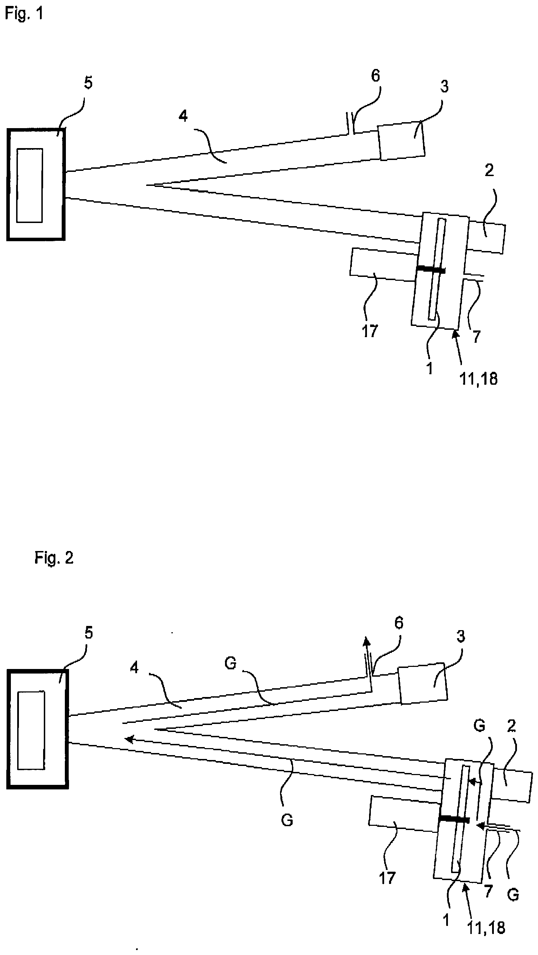

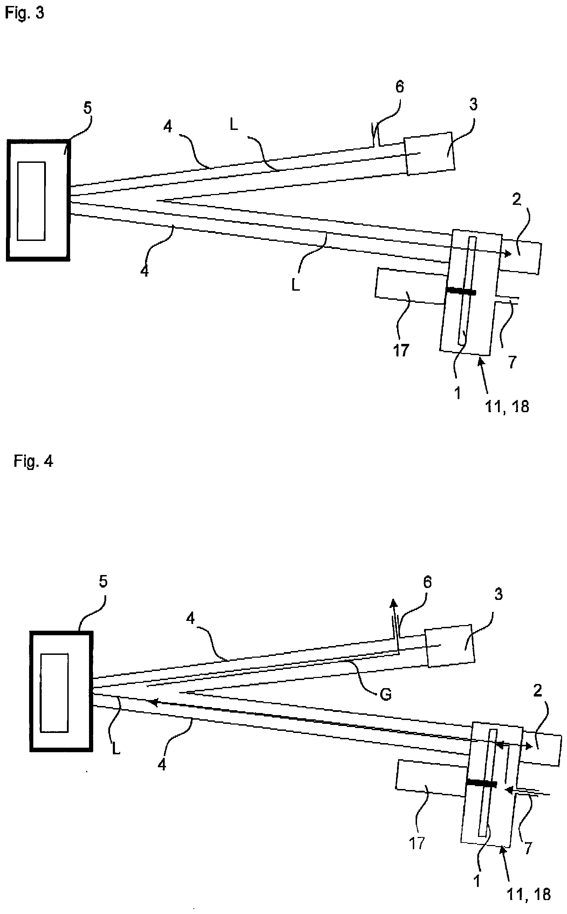

**Fig. 1 bis 4** zeigen die Messanordnung, die in der erfindungsgemäßen Gassensorvorrichtung eingesetzt wird.

Nicht dargestellt sind in den Figuren ein äußeres Gehäuse des Handgeräts, das die Komponenten der Messanordnung einhaust, sowie eine an dem äußeren Gehäuse vorliegende Anzeigevorrichtung zur Anzeige der Messergebnisse, die mit einer Datenverarbeitungseinheit verbunden ist, die Teil des IR-Detektors sein kann oder mit diesem innerhalb des Gehäuses zur Auswertung der erfassten Messdaten verbunden vorliegen kann. Gegebenenfalls kann die Gassensorvorrichtung auch eine Kommunikationsschnittstelle aufweisen, mit der Messdaten oder Auswertungsergebnisse an eine andere Vorrichtung übertragen werden können. Zudem kann das äußere Gehäuse der Gassensorvorrichtung mit Halte- oder Tragvorrichtungen ausgestattet sein, die das Mitführen und ggf. Positionieren der mobilen, tragbaren Gassensorvorrichtung erleichtern. Selbstverständlich weist eine erfindungsgemäße Gassensorvorrichtung auch zumindest eine Energiequelle für die Antriebseinheit, die IR-Lichtquelle und den IR-Detektor (sowie ggf. weitere Energieverbraucher wie Datenverarbeitungseinheit und Anzeigevorrichtung etc.) auf. Als Energiequelle können ein aufladbarer Akkumulator, Batterie(n), Solarzellen, eine Netzanschlussmöglichkeit oder eine Kombination zumindest zweier dieser Energiequellen vorgesehen sein.

Die in **Fig. 1 bis 4** gezeigte Messanordnung einer erfindungsgemäßen mobilen, tragbaren Gassensorvorrichtung weist einen V-förmigen Kanal 4 als Erfassungskammer 4 auf, die von dem zu messenden Gasstrom G durchströmt wird. An einem Ende des V-förmigen Kanals 4 ist eine Infrarot-Lichtquelle 3 angeordnet, die Infrarot-Lichtstrahlung aussendet, das entsprechend Lichtpfad L die Erfassungskammer 4 passiert. Hierzu befindet sich an der Spitze des V-förmigen Kanals 4, an dem die beiden Schenkel des V-förmigen Kanals 4 aufeinander treffen, ein Umlenkspiegel 5 für die IR-Lichtstrahlung. Der Umlenkspiegel 5 ist aus einem IR-Licht reflektierenden Material und so ausgebildet und ausgerichtet, dass die von der Infrarot-Lichtquelle 3 durch den ersten Schenkel des V-förmigen Kanals 4 auf den Spiegel 5 treffende IR-Lichtstrahlung in den zweiten Schenkel des V-förmigen Kanals 4 reflektiert und umgelenkt wird, an dessen Ende ein Infrarot-Detektor 2 angeordnet ist.

Im dargestellten Beispiel ist der zwischen den Schenkeln des V-förmigen Kanals 4 gebildete Winkel ein spitzer Winkel, sodass der V-förmige Kanal 4 einerseits eine möglichst lange Strecke des Lichtpfads L durch den Gasstrom G bereitstellt, andererseits aber auch platzsparend in einem tragbaren Gehäuse untergebracht werden kann. Selbstverständlich sind von dem dargestellten Beispiel abweichende Ausführungen einer Erfassungskammer denkbar, an deren Enden ein Infrarot-Detektor und eine Infrarot-Lichtquelle angeordnet sind. Je nach Gehäusevorgaben und Kanalabmessungen sind auch ungewinkelte, rechtwinklige oder stumpfgewinkelte Erfassungskammern denkbar. Zur weiteren Verlängerung der Messstrecke kann die Erfassungskammer auch mehrfach gewinkelt beispielsweise durch einen N- oder M-förmigen Kanal gebildet werden. Gerade für die Messung verdünnter Gase oder Gasspuren sind längere Messstrecken vorteilhaft, da die Absorption gemäß dem Lambert-Beerschen Gesetz mit der Länge der durchstrahlten Probe zunimmt.

Die Messanordnung der Gassensorvorrichtung weist eine dem Infrarot-Detektor 2 in Bezug auf den Lichtpfad L vorgeschaltete, mittels einer Antriebseinheit 17 angetriebene rotierende Lochscheibe 1 zur Unterbrechung der auf den IR-Detektor 2 auftreffenden Lichtsignale auf. Eine in **Fig. 1 bis 4** nicht näher dargestellte Pumpvorrichtung als Gasflussregulator, die erfindungsgemäß mit der rotierenden Lochscheibe 1 kombiniert ist, bewirkt, dass die erfindungsgemäße Gassensorvorrichtung mit einer einzigen Antriebseinheit 17 auskommt, was sich positiv auf Größe und Gewicht der tragbaren Gassensorvorrichtung auswirkt.

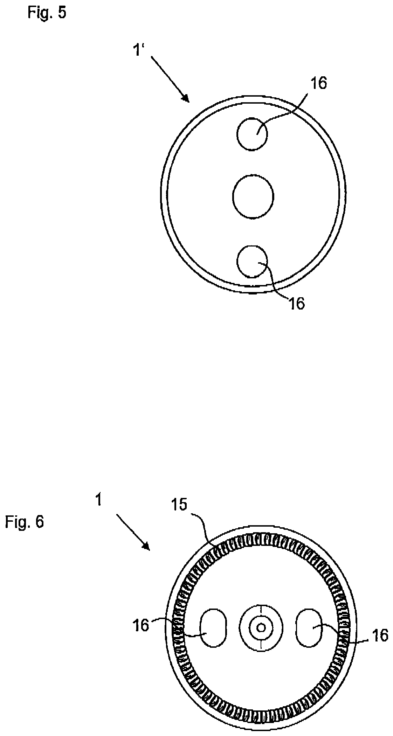

Die mit der rotierenden Lochscheibe 1 kombinierte Pumpvorrichtung ist in einem Gehäuse 11,18 positioniert, das einen Gaseinlass 7 aufweist und fluidisch mit dem V-förmigen Kanal 4 an dem Ende mit dem Infrarot-Detektor 2 verbunden ist, sodass der durch den Gaseinlass 7 angesaugte Gasstrom G den V-förmigen Kanal 4 bis zum Gasauslass 6 durchströmen kann, der an oder nahe dem Ende des V-förmigen Kanals 4 mit der Infrarot-Lichtquelle 3 angeordnet ist. Zudem gestattet das Gehäuse 11,18 den Durchtritt der IR-Lichtstrahlung gemäß Lichtpfad L zum IR-Detektor 2, wobei die rotierende Lochscheibe 1 so innerhalb des Lichtpfads L angeordnet ist, dass das oder die Löcher 16 der Lochscheibe 1 die Chopperfunktion erfüllen. **Fig. 5** zeigt eine herkömmliche Lochscheibe 1', die zum Zweck der Lichtunterbrechung eingesetzt werden kann.

So ist zwar prinzipiell ein Füllen der durch die Erfassungskammer 4 gebildeten Messstrecke rein durch Diffusion ohne Pumpvorrichtung möglich, dies erfordert aber eine relativ lange Zeitdauer, bis die Erfassungskammer komplett und gleichmäßig gefüllt ist und somit ein zuverlässiges Messergebnis erhalten werden kann.

Andererseits sind zu große Volumenströme durch die Erfassungskammer 4 nicht wünschenswert, da hierdurch gerade bei geringen Gaskonzentrationen unerwünschte Verdünnungseffekte auftreten können. Diffusionsähnliche Gasströmungen, die die Messstrecke mit Volumenströmen in einem Bereich von 2 bis 40 l/h entlang der Lichtstrahlführung passieren, sind daher bevorzugt, um korrekte Bestimmungen durchführen zu können.

Es ist zwar denkbar, dass eine wie in **Fig. 5** gezeigte Lochscheibe 1' über mechanische Transmissionsvorrichtungen mit einer Pumpvorrichtung gekoppelt werden kann, um somit von einer einzigen Antriebseinheit angetrieben zu werden, solche Ansätze sind allerdings entweder mit einer ungewollten Lärmentwicklung oder einem hohen Energiebedarf verbunden.

Überraschend hat sich gezeigt, dass ein Seitenkanalverdichter die Erfordernisse bezüglich Laufruhe, Energiebedarf und auch hinsichtlich der Volumenströme in Verbindung mit einer Drehzahl des Laufrads 1 erfüllt, das gleichzeitig die Chopperfunktion als rotierende Lochscheibe 1 ausführt. Hierbei wird der IR-Lichtstrahl durch das oder die Löcher 16 in kurze Lichtimpulse, vorzugsweise mit einer Frequenz von 100 Hz zerteilt.

Der Seitenkanalverdichter stellt auch bei Anordnung eines Partikel- bzw. Staubfilters (nicht in den Figuren gezeigt) am Gaseinlass einen ausreichenden Volumenstrom zur Durchströmung der Erfassungskammer bereit. Hierbei können Textilfilter, Messing-Filter oder Sinter-Filter eingesetzt werden.

**Fig. 6 bis 11** zeigen beispielhaft einen Seitenkanalverdichter 10 und dessen Komponenten Laufrad-Lochscheibe 1, Seitenkanalgehäuseteil 11 und Motorgehäuseteil 18.

Im gezeigten Beispiel weist das als Lochscheibe dienende Laufrad 1 zwei Löcher 16 und eine Beschaufelung 15 auf, die mit dem Seitenkanal 14, der im Seitenkanalgehäuse 11 ausgebildet ist, zur Verdichtung des Gasstroms zusammenwirkt. Zum Unterbrechen des IR-Lichts entlang des Lichtpfads L zum Detektor 2 wird der Seitenkanalverdichter 10 derart positioniert, dass die Löcher 16 der Laufrad-Lochscheibe 1 in einer definierten Winkellage in dem Lichtpfad L liegen. Mit Winkellage ist hierbei eine Stelle auf der Kreisbahn gemeint, auf der sich die Löcher 16 mit der rotierenden Laufrad-Lochscheibe 1 bewegen. Zum Durchtritt des IR-Lichts entlang des Lichtpfads L zum Detektor 2 weisen das Seitenkanalgehäuse 11 und die Motorhalterung 18 an den Stellen entlang des Lichtpfads L, die der Winkellage entsprechen, optische Elemente 12, 20 auf, die für die verwendeten IR-Wellenlängen transparent sind. In der Motorhalterung 18 kann anstelle des optischen Elements 20 auch der IR-Detektor 2 verbaut sein. Gegebenenfalls kann dieser auch ein optisches Element 20 aufweisen, bei dem es sich, wie bei dem optischen Element 12 in dem Seitenkanalgehäuse 11, nicht nur um eine IR-transparente Scheibe handeln kann, das optische Element 12, 20 kann auch eine weitere optische Funktion als Linse, Wellenlängenfilter, Spiegel etc. aufweisen.

Der Seitenkanalverdichter 10, der in der Gassensorvorrichtung zum Einsatz kommt und die vorgegebenen Bedingungen hinsichtlich Volumenstrom, Drehzahl, Druckunterschied etc. erfüllt, weist spezielle Geometrien auf. Unter den verschiedenen Kanalformen eines Seitenkanalverdichters, die den Strömungsverlauf beeinflussen, ist ein Einseitenkanal, der im Seitenkanal-Gehäuseteil 11 des Seitenkanalverdichters ausgebildet ist, hier mit halbkreisförmigem Querschnitt, bevorzugt.

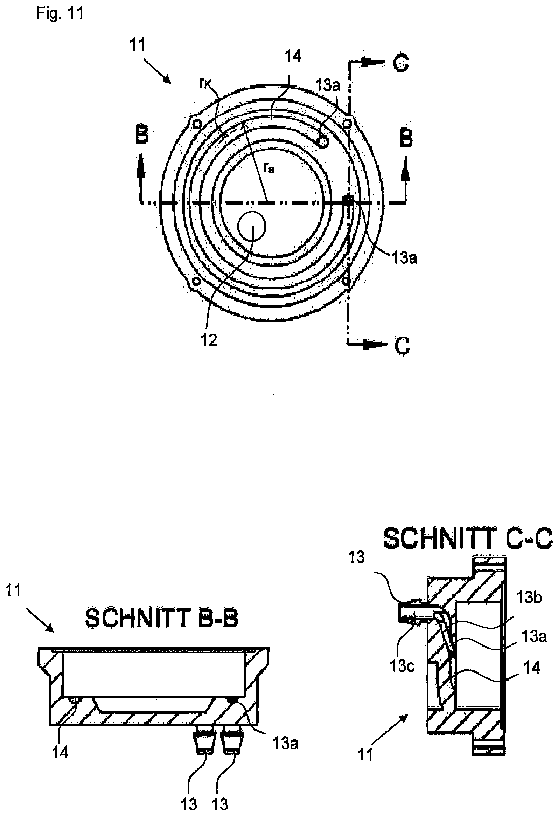

Der Seitenkanal 14 ist relativ klein dimensioniert, wobei ein Verhältnis r_{K}/rₐ (vgl. **Fig. 11**) zwischen dem Radius r_{K} des Querschnitts des Seitenkanals 14 und dem Radius rₐ des Außenumfangs des Seitenkanals 14 deutlich unter 0,1 liegt.

Der Seitenkanalverdichter 10 weist einen Saug- und einen Druckstutzen 13 auf, wobei das zu messende Gas durch den Saugstutzen 13 angesaugt wird, an der Mündung 13a in den Seitenkanal 14 gelangt und dort mittels der Beschaufelung 15 des Laufrads 1 zur Mündung 13a des Druckstutzens 13 gefördert wird. Dort ist der Auslauf 13b aus dem Seitenkanal 14 zur Anschlussöffnung 13c hin nicht wie der Einlauf am Saugstutzen 13 rechtwinklig, sondern verläuft in etwa tangential, um einen Druckverlust an dieser Stelle zu minimieren.

Der Unterbrecherabschnitt in dem Seitenkanal-Gehäuseteil 11, der zwischen einem Saug- und einem Druckstutzen 13 Saug- und Druckseite voneinander trennt, erstreckt sich zumindest über zwei Schaufelteilungen der Beschaufelung 15, inklusive einer Schaufelkantendicke, der Laufrad-Lochscheibe 1. Die Größe des Unterbrecherabschnitts ist damit auch von der Beschaufelung 15 der Laufrad-Lochscheibe 1, d. h. der Anzahl und Dicke der Schaufeln abhängig bzw. umgekehrt.

Die Beschaufelung 15 einer vorteilhaften Laufrad-Lochscheibe 1 kann eine Schaufelform in Radialrichtung aufweisen, wobei die Schaufeln in Laufrichtung geneigt sein können. Die Anzahl der Schaufeln kann je nach Größe des Unterbrecherabschnitts zwischen 12 und 60 liegen. Für einen Unterbrecherabschnitt mit einem Umfangswinkel von 45° muss die Laufrad-Lochscheibe 1 zumindest 16 Schaufeln aufweisen, um auch die weiteren Anforderungen an den Seitenkanalverdichter 10 zu erfüllen.

In einem Ausführungsbeispiel eines Seitenkanalverdichters, der für eine erfindungsgemäße Gassensorvorrichtung zur Bereitstellung eines Gasvolumenstroms zwischen 20 und 40 l/h und zur Bereitstellung der Chopperfunktion ausgelegt ist, liegt das Verhältnis zwischen dem Radius des Querschnitts des Seitenkanals und dem Radius des Außenumfangs des Seitenkanals in einem Bereich von 0,05 bis 0,07. Bei einem Durchmesser des Seitenkanalverdichters von beispielsweise 30 mm bedeutet dies einen Durchmesser des halbkreisförmigen Seitenkanals von lediglich 2,2 bis 2,6 mm. Ein Seitenkanalverdichter mit derartigen Abmessungen kann auch bei Umgebungsdruckschwankungen zuverlässig den geforderten Volumenstrom fördern.

Der Unterbrecherabschnitt in dem Seitenkanal-Gehäuseteil zwischen dem Saug- und dem Druckstutzen kann dabei einen Winkel in einem Bereich von 38° bis 45° aufspannen und sich zumindest über zwei Schaufelteilungen der Beschaufelung einer Laufrad-Lochscheibe erstrecken, die zwischen 12 und 60 Schaufeln mit einer Schaufelform in Radialrichtung aufweist. Die Schaufeln der Beschaufelung können dabei in Laufrichtung um einen Schaufelwinkel in einem Bereich von 50° bis 60° zur Laufradebene geneigt sein. Der Tangentialauslauf des Seitenkanals zur Vermeidung von Druckverlust kann einen Winkel zum Seitenkanal in einem Bereich von 160° bis 165° aufweisen.

Sowohl die Laufrad-Lochscheibe 1 als auch das Seitenkanal-Gehäuseteil 11 und das Motorhalterungs-Gehäuseteil 18 können jeweils mittels 3D-Druck einstückig, vorzugsweise aus einem Kunststoffmaterial hergestellt werden, das jeweils in Abhängigkeit der gewünschten Materialeigenschaften aus einem oder mehreren Kunststoffen zusammengesetzt sein kann. Einzelne oder alle Bauteile können aber auch durch ein metallurgisches generatives Fertigungsverfahren oder andere, zerspanende Verfahren, insbesondere durch Drehen oder durch Guss- bzw. Spritzgussverfahren, aus Kunststoffen oder metallischen Werkstoffen hergestellt werden.

3D-Druckverfahren bieten den Vorteil, erforderliche Dichtelemente aus einem abdichtenden Kunststoffmaterial, wie z. B. Nitril-Butadien oder Ethylen-Propylen-Kautschuk, die zur Abdichtung zwischen den Gehäuseteilen 11, 18 und zwischen dem MotorhalterungsGehäuseteil 18 und der Antriebseinheit 17 vorgesehen sind, mit drucken zu können. Auch ist denkbar, die optischen Elemente 12, 20 aus einem für IR-transparenten Material ebenfalls mit zu drucken. Das Motorgehäuseteil 18 weist eine Aufnahmeöffnung 18a für die Antriebseinheit 17 und eine Passausnehmung 18b auf, in der ein Flanschabschnitt der Antriebseinheit 17 aufgenommen wird. Dieser kann wie dargestellt von einer Kreisform abweichen, um eine lagerichtige Anordnung der Antriebseinheit 17 bei der Montage zu erleichtern. Die Antriebseinheit ist derart ausgewählt, dass eine für die Chopperfunktion erforderliche Drehzahl von beispielsweise 3000 Umdrehungen pro Minute für eine Chopperfunktion mit einer Unterbrecherfrequenz von 100 Hz bei zwei Löchern 16 in der Laufrad-Lochscheibe 1 bei gleichzeitig ausreichendem Drehmoment geleistet wird, das für die Seitenkanalverdichterfunktion zur Förderung des gewünschten Volumenstroms erforderlich ist.

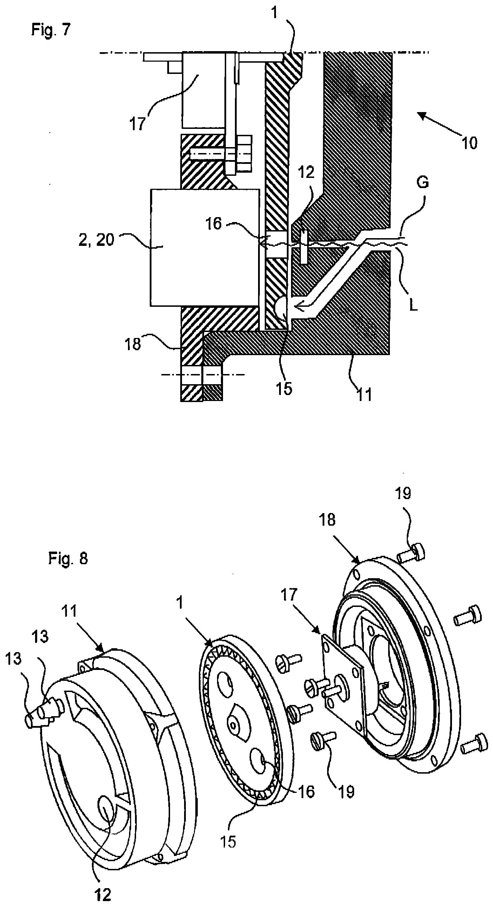

Die Antriebseinheit 17 kann wie in **Fig. 8** dargestellt von innen in dem Motorgehäuseteil 18 verschraubt werden. Für diese Ausführungsform kann es sinnvoll sein, die Löcher 16 in der Laufrad-Lochscheibe 1 als Langlöcher auszubilden, wie dies in Fig. 6 zu sehen ist, um einen Zugang zu den Schrauben 19 durch die Laufrad-Lochscheibe 1 zu sichern. In **Fig. 8** ist lediglich das optische Element 12 in dem Seitenkanalgehäuseteil 11 zu sehen, das entsprechende optische Element 20 in dem Motorgehäuseteil 18 ist durch dessen flanschartige Gestaltung verdeckt, die zur verbesserten Abdichtung mit dem Seitenkanalgehäuseteil 11, das entsprechend geformt ist, dient. Auch Motorgehäuseteil 18 und Seitenkanalgehäuseteil 11 können durch Schrauben lösbar miteinander verbunden werden. Eine gute Abdichtung ist erforderlich, um ungewolltes Entweichen von Gas aus dem Seitenkanalverdichter 10 zu vermeiden.

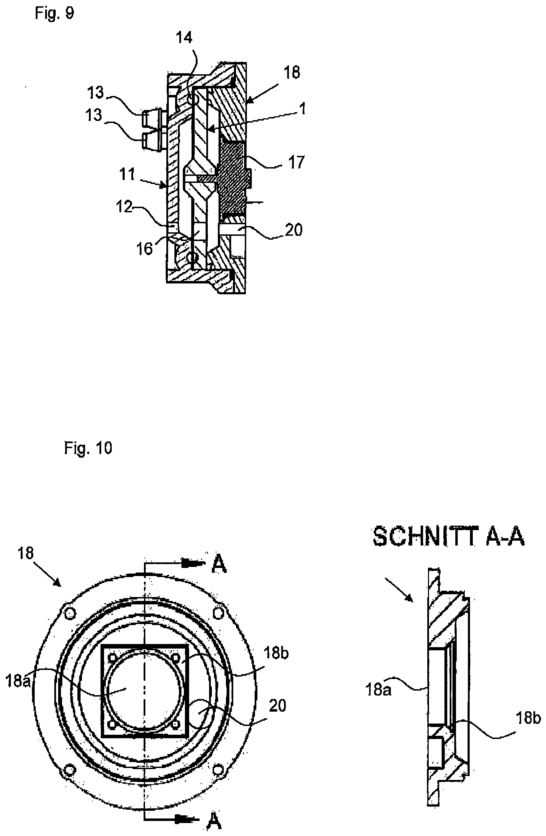

In **Fig. 10** ist das optische Element 20 im Motorgehäuseteil 18 und in **Fig. 9** zusätzlich auch das optische Element 12 in dem Seitenkanalgehäuseteil 11 schematisch als Durchtrittsöffnung für IR-Licht dargestellt.

### BEZUGSZEICHENLISTE

- 1: Laufrad-Lochscheibe
- 1': Lochscheibe
- 2: IR-Detektor
- 3: IR-Sender
- 4: Erfassungskammer
- 5: Umlenkspiegel
- 6: Gasauslass
- 7: Gaseinlass
- 10: Seitenkanalverdichter
- 11: Seitenkanalgehäuseteil
- 12: optisches Element
- 13: Einlass-, Auslassstutzen
- 13a: Seitenkanalmündung
- 13b: Tangentialauslauf
- 13c: Anschlussöffnung
- 14: Seitenkanal
- 15: Beschaufelung
- 16: Loch
- 17: Antriebseinheit
- 18: Motorhalterungsgehäuseteil
- 18a: Aufnahmeöffnung
- 18b: Passausnehmung
- 19: Befestigungselement
- 20: optisches Element
- G: Gasstrom
- L: IR-Lichtpfad
- r_{K}, rₐ: Radius Seitenkanalquerschnitt, Radius Seitenkanal-Außenumfang

## Patentansprüche

1. Mobile, tragbare Gassensorvorrichtung mit einer Infrarot-Lichtquelle (3), einer Erfassungskammer (4) und einem Infrarot-Detektor (2),
wobei die Infrarot-Lichtquelle (3) und der Infrarot-Detektor (2) an entgegengesetzten Enden der Erfassungskammer (4) angeordnet sind, und die Gassensorvorrichtung eine dem Infrarot-Detektor (2) vorgeschaltete, mittels einer Antriebseinheit (17) angetriebene rotierende Lochscheibe (1) und einen Gasflussregulator aufweist, der eine mit der rotierenden Lochscheibe (1) kombinierte Pumpvorrichtung bildet und wobei die Antriebseinheit (17) zum Antreiben der rotierenden Lochscheibe (1) die einzige Antriebseinheit (17) der Gassensorvorrichtung ist,
und wobei
die Pumpvorrichtung ein Seitenkanalverdichter (10) ist, wobei die rotierende Lochscheibe (1) als dessen Laufrad (1) mit einer Beschaufelung (15) und mit zumindest einem Loch (16) ausgebildet ist, und
dass der Seitenkanalverdichter (10) ein Gehäuse (11,18) aufweist, das
- aus einem für IR-Licht transparenten Material zum Durchtritt des IR-Lichts besteht, oder das
- zumindest zwei optische Elemente (12, 20) aus einem IR-transparenten Material zum Durchtritt des IR-Lichts aufweist, die in einem zwischen der Infrarot-Lichtquelle (3) und dem Infrarot-Detektor (2) definierten Lichtpfad (L) liegen und deren Positionierung vor und hinter der Laufrad-Lochscheibe (1) in Bezug auf den Lichtpfad (L) mit einer vorbestimmten Winkellage des zumindest einen Lochs (16) der Laufrad-Lochscheibe (1) korrespondieren.

2. Gassensorvorrichtung nach Anspruch 1,
**dadurch gekennzeichnet, dass**
die Erfassungskammer (4) durch einen V-förmigen Kanal (4) gebildet wird, der an einer Umlenkspitze, an der die beiden Schenkel des V-förmigen Kanals (4) aufeinandertreffen, einen Umlenkspiegel (5) für das IR-Licht aufweist, wobei an dem Ende des V-förmigen Kanals (4) mit der Infrarot-Lichtquelle (3) ein Gasauslass (6) vorliegt, und wobei ein Gaseinlass (7) in das Gehäuse (11,18) mündet, das fluidisch mit dem V-förmigen Kanal (4) an dem Ende mit dem Infrarot-Detektor (2) verbunden ist.

3. Gassensorvorrichtung nach Anspruch 1 oder 2,
**dadurch gekennzeichnet, dass**
der Seitenkanalverdichter (10) ausgelegt ist
- für eine vorbestimmte Drehzahl der Laufrad-Lochscheibe (1) und
- zur Bereitstellung eines Gasvolumenstroms in einem Bereich von 2 bis 40 l/h.

4. Gassensorvorrichtung nach zumindest einem der Ansprüche 1 bis 3,
**dadurch gekennzeichnet, dass**
ein Seitenkanal (14) in einem Seitenkanalgehäuseteil (11) des Gehäuses (11, 18) des Seitenkanalverdichters (10) als Einseitenkanal, vorzugsweise mit halbkreisförmigem Querschnitt, ausgebildet ist, wobei besonders bevorzugt ein Verhältnis (r_{K}/rₐ) zwischen einem Radius (r_{K}) des Querschnitts des Seitenkanals (14) und einem Radius (rₐ) des Außenumfangs des Seitenkanals (14) unter 0,1 liegt.

5. Gassensorvorrichtung nach zumindest einem der Ansprüche 1 bis 4,
**dadurch gekennzeichnet, dass**
der Seitenkanal (14) in dem Seitenkanalgehäuseteil (11) einen Unterbrecherabschnitt zwischen einem Saug- und einem Druckstutzen (13) aufweist, der sich zumindest über zwei Schaufelteilungen der Beschaufelung (15) der Laufrad-Lochscheibe (1) erstreckt, wobei ein Tangentialauslauf (13b) den Seitenkanal (14) mit dem Druckstutzen (13) verbindet.

6. Gassensorvorrichtung nach zumindest einem der Ansprüche 1 bis 5,
**dadurch gekennzeichnet, dass**
die Laufrad-Lochscheibe (1) und/oder das Seitenkanalgehäuseteil (11) und/oder ein Motorhalterungsgehäuseteil (18) mittels 3D-Druck jeweils einstückig, vorzugsweise aus einem Kunststoffmaterial, hergestellt sind,
wobei bevorzugt
- die optischen Elemente (12, 20) aus einem IR-transparenten Material und/oder
- Dichtelemente, die zur Abdichtung zwischen den Gehäuseteilen (11, 18) und/oder zwischen dem Motorhalterungsgehäuseteil (18) und der Antriebseinheit (17) vorgesehen sind, aus einem abdichtenden Kunststoffmaterial gedruckt sind.

7. Gasmessverfahren unter Verwendung einer mobilen, tragbaren Gassensorvorrichtung nach zumindest einem der Ansprüche 1 bis 6,
**umfassend die Schritte**
- Positionieren der mobilen, tragbaren Gassensorvorrichtung an einer Gasmessstelle,
- Aktivieren der einzigen Antriebseinheit (17) der Gassensorvorrichtung zum Antreiben des Seitenkanalverdichters (10) und rotieren Lassen der als dessen Laufrad (1) ausgebildeten Lochscheibe (1), dabei
- Einstellen der mit der rotierenden Lochscheibe (1) kombinierten Pumpvorrichtung mit einer vorbestimmten Drehzahl, dadurch Bereitstellen eines Gasvolumenstroms in einem Bereich von 2 bis 40 l/h, und Erzeugen eines diffusionsähnlichen Gasstroms (G) durch die Erfassungskammer (4) hindurch, und
- Aktivieren der IR-Lichtquelle (3) und des IR-Detektors (2), sodass IR-Strahlung entlang eines IR-Lichtpfads (L) die Erfassungskammer (4) durchläuft, dabei wellenlängenabhängig und in Abhängigkeit der Art und Konzentration IR-absorbierender Gase Absorption stattfinden Lassen;
- Erfassen der transmittierten IR-Strahlung mittels des IR-Detektors (2) und hieraus Bestimmen der Art und Konzentration der IR-absorbierenden Gase.

8. Verwendung einer mobilen, tragbaren Gassensorvorrichtung nach zumindest einem der Ansprüche 1 bis 6 zum Durchführen des Verfahrens nach Anspruch 7.

## Claims

1. A mobile, portable gas sensing device comprising an infrared light source (3), a sensing chamber (4), and an infrared detector (2),
wherein the infrared light source (3) and the infrared detector (2) are arranged at opposite ends of the sensing chamber (4), and the gas sensing device has a rotating perforated disk (1), which is connected upstream of the infrared detector (2) and is driven by means of a drive unit (17), and a gas flow regulator, which forms a pumping device, which is combined with the rotating perforated disk (1), and wherein the drive unit (17) for driving the rotating perforated disk (1) is the only drive unit (17) of the gas sensing device,
and wherein
the pumping device is a side duct compressor (10), wherein the rotating perforated disk (1) as the rotor (1) thereof is formed with a blading (15) and with at least one hole (16), and
that the side duct compressor (10) has a housing (11, 18), which
- consists of a material, which is transparent for IR light, for passage of the IR light,
or which
- has at least two optical elements (12, 20) made of an IR-transparent material for passage of the IR light, which lie in a light path (L) defined between the infrared light source (3) and the infrared detector (2), and the positioning of which upstream of or downstream from the rotor perforated disk (1) correspond to a predetermined angular position of the at least one hole (16) of the rotor perforated disk (1) with respect to the light path (L).

2. The gas sensing device according to claim 1,
**characterised in that**
the sensing chamber (4) is formed by a V-shaped duct (4), which has a deflection mirror (5) for the IR light at a deflection tip, at which the two legs of the V-shaped duct (4) meet, wherein a gas outlet (6) is present at the end of the V-shaped duct (4) with the infrared light source (3), and wherein a gas inlet (7) leads into the housing (11, 18), which is fluidically connected to the V-shaped duct (4) at the end with the infrared detector (2).

3. The gas sensing device according to claim 1 or 2,
**characterised in that**
the side duct compressor (10) is designed
- for a predetermined speed of the rotor perforated disk (1) and
- to provide a gas volume flow in a range of from 2 to 40 l/h.

4. The gas sensing device according to at least any one of claims 1 to 3,
**characterised in that**
a side duct (14) in a side duct housing part (11) of the housing (11, 18) of the side duct compressor (10) is formed as single side duct, preferably with semicircular cross section, wherein particularly preferably a ratio (rₖ/rₐ) between a radius (rₖ) of the cross section of the side duct (14) and a radius (rₐ) of the outer circumference of the side duct (14) lies below 0.1.

5. The gas sensing device according to at least any one of claims 1 to 4,
**characterised in that**
in the side duct housing part (11) between a suction and a pressure connection (13), the side duct (14) has a breaker portion, which extends at least over two blade pitches of the blading (15) of the rotor perforated disk (1), wherein a tangential outlet (13b) connects the side duct (14) to the pressure connection (13).

6. The gas sensing device according to at least any one of claims 1 to 5,
**characterised in that**
the rotor perforated disk (1) and/or the side duct housing part (11) and/or a motor mount housing part (18) are each made in one piece by means of 3D printing, preferably of a plastic material,
wherein preferably
- the optical elements (12, 20) are printed from an IR transparent material and/or
- sealing elements, which are provided for sealing between the housing parts (11, 18) and/or between the motor mount housing part (18) and the drive unit (17), are printed from a sealing plastic material.

7. A gas measuring method using a mobile, portable gas sensing device according to at least any one of claims 1 to 6,
**comprising the steps of**
- positioning the mobile, portable gas sensing device at a gas measuring point,
- activating the only drive unit (17) of the gas sensing device to drive the side duct compressor (10) and allowing the perforated disk (1), which is formed as the rotor (1) thereof, to rotate, thereby
- setting the pumping device, which is combined with the rotating perforated disk (1), with a predetermined speed, thus providing a gas volume flow in a range of from 2 to 40 l/h, and creating a diffusion-like gas flow (G) through the sensing chamber (4), and
- activating the IR light source (3) and the IR detector (2), so that IR radiation passes through the sensing chamber (4) along an IR light path (L), thereby allowing absorption to take place as a function of wavelength and as a function of the type and concentration of IR absorbing gases;
- sensing the transmitted IR radiation by means of the IR detector (2) and determining therefrom the type and concentration of the IR-absorbing gases.

8. Use of a mobile, portable gas sensing device according to at least any one of claims 1 to 6 for performing the method according to claim 7.

## Revendications

1. Dispositif de capteur de gaz mobile portable avec une source lumineuse infrarouge (3), une chambre de détection (4) et un détecteur infrarouge (2), dans lequel la source lumineuse infrarouge (3) et le détecteur infrarouge (2) sont disposés à des extrémités opposées de la chambre de détection (4), et le dispositif de capteur de gaz présente un diaphragme rotatif (1) monté en amont du détecteur infrarouge (2), entraîné au moyen d'un module d'entraînement (17), et un régulateur de flux gazeux qui forme un dispositif de pompe combiné au diaphragme rotatif (1) et dans lequel le module d'entraînement (17) est le seul module d'entraînement (17) du dispositif de capteur de gaz pour l'entraînement du diaphragme rotatif (1),
et dans lequel
le dispositif de pompe est un compresseur à canal latéral (10), dans lequel le diaphragme rotatif (1) est réalisé en tant que sa roue de roulement (1) avec un aubage (15) et avec au moins un orifice (16), et
que le compresseur à canal latéral (10) présente un logement (11, 18) qui
- se compose d'un matériau transparent pour la lumière IR pour le passage de la lumière IR, ou qui
- présente au moins deux éléments optiques (12, 20) en un matériau transparent à l'IR pour le passage de la lumière IR qui se situent dans un trajet lumineux (L) défini entre la source lumineuse infrarouge (3) et le détecteur infrarouge (2) et dont le positionnement devant et derrière le diaphragme de roue de roulement (1) par rapport au trajet lumineux (L) correspond à une position angulaire prédéterminée de l'au moins un orifice (16) du diaphragme de roue de roulement (1).

2. Dispositif de capteur de gaz selon la revendication 1,
**caractérisé en ce que**
la chambre de détection (4) est formée par un canal en forme de V (4) qui présente à une pointe de renvoi au niveau de laquelle les deux branches du canal en forme de V (4) convergent un miroir de renvoi (5) pour la lumière IR, dans lequel une sortie de gaz (6) est présente à l'extrémité du canal en forme de V (4) avec la source lumineuse infrarouge (3), et dans lequel une entrée de gaz (7) débouche dans le logement (11, 18) qui est connecté par voie fluidique avec le canal en forme de V (4) à l'extrémité au détecteur infrarouge (2).

3. Dispositif de capteur de gaz selon la revendication 1 ou 2,
**caractérisé en ce que**
le compresseur à canal latéral (10) est conçu
- pour une vitesse de rotation prédéterminée du diaphragme de roue de roulement (1) et
- pour la mise à disposition d'un courant volumique gazeux dans une région de 2 à 40 l/h.

4. Dispositif de capteur de gaz selon au moins une des revendications 1 à 3,
**caractérisé en ce que**
un canal latéral (14) est réalisé dans une partie de logement de canal latéral (11) du logement (11, 18) du compresseur à canal latéral (10) en tant que canal unilatéral, de préférence avec une section transversale semi-circulaire, dans lequel un rapport (rₖ/rₐ) entre un rayon (rₖ) de la section transversale du canal latéral (14) et un rayon (rₐ) de la périphérique externe du canal latéral (14) se situe de manière particulièrement préférée en dessous de 0,1.

5. Dispositif de capteur de gaz selon au moins une des revendications 1 à 4,
**caractérisé en ce que**
le canal latéral (14) présente dans la partie de logement de canal latéral (11) une section d'interruption entre une tubulure d'aspiration et de refoulement (13) qui s'étend au moins sur deux divisions d'aube de l'aubage (15) du diaphragme de roue de roulement (1), dans lequel une sortie tangentielle (13b) connecte le canal latéral (14) à la tubulure de refoulement (13).

6. Dispositif de capteur de gaz selon au moins une des revendications 1 à 5,
**caractérisé en ce que**
le diaphragme de roue de roulement (1) et/ou la partie de logement de canal latéral (11) et/ou une partie de logement de fixation de moteur (18) sont fabriqués au moyen d'une impression 3D chacun d'une pièce, de préférence en un matériau plastique,
dans lequel de préférence
- les éléments optiques (12, 20) sont imprimés en un matériau transparent à l'IR et/ou
- des éléments d'étanchéité qui sont prévus pour l'étanchéification entre les parties de logement (11, 18) et/ou entre la partie de logement de fixation de moteur (18) et le module d'entraînement (17) sont imprimés en un matériau plastique étanchéifiant.

7. Procédé de mesure de gaz utilisant un dispositif de capteur de gaz mobile portable selon au moins une des revendications 1 à 6,
**comprenant les étapes**
- positionnement du dispositif de capteur de gaz mobile portable à un point de mesure de gaz,
- activation du seul module d'entraînement (17) du dispositif de capteur de gaz pour l'entraînement du compresseur à canal latéral (10) et rotation du diaphragme (1) réalisé en tant que sa roue de roulement (1), ce faisant
- réglage du dispositif de pompe combiné au diaphragme rotatif (1) avec une vitesse de rotation prédéterminée, mise à disposition de ce fait d'un courant volumique gazeux dans une région de 2 à 40 l/h, et génération d'un courant gazeux similaire à une diffusion (G) à travers la chambre de détection (4), et
- activation de la source lumineuse IR (3) et du détecteur IR (2) de sorte qu'un rayonnement IR le long d'un trajet lumineux IR (L) parcourt la chambre de détection (4), ce faisant laisser avoir lieu une absorption dépendant de la longueur d'onde et en fonction du type et de la concentration de gaz absorbant l'IR;
- détection du rayonnement IR transmis au moyen du détecteur IR (2) et détermination à partir de celui-ci du type et de la concentration des gaz absorbant l'IR.

8. Utilisation d'un dispositif de capteur de gaz mobile portable selon au moins une des revendications 1 à 6 pour la réalisation du procédé selon la revendication 7.
